# EUROPEAN PATENT APPLICATION

(11) **EP 4 786 826 A1**
(43) Date of publication of application: **05.08.2026**
(21) Application number: 24871532.8
(22) Date of filing: 08.08.2024
(51) Int. Cl.: F16J 15/3272, F16J 15/16

(54) **SEALING DEVICE**

(30) Priority: 27.09.2023 JP 2023166570
(71) Applicant: NOK Corporation, Minato-ku Tokyo 105-8585 (JP)
(72) Inventor: YOSHIDA Yusuke, Kitaibaraki-shi, Ibaraki 319-1535 (JP)
(74) Representative: Global IP Europe Patentanwaltskanzlei
(86) International application number: PCT/JP2024/028463
(87) International publication number: WO 2025/069730

(57) **Abstract**

A sealing device (1) is a sealing device for sealing an annular gap. The sealing device (1) includes a single seal ring (2). The single seal ring (2) exerts a desired sealing performance for a fluid, even in a low-temperature environment

## Description

### Technical Field

The present invention relates to a sealing device, and particularly, relates to a sealing device that is suitably used even for a fluid having a low viscosity.

### Background Art

For sealing a gap between a member that performs reciprocating motion and a hole that has a tubular shape and into which the member is inserted, a sealing device including a seal ring is conventionally used. For example, the seal ring is attached to a piston of a pump, and is configured to prevent or restrain the leakage of a fluid while the piston pressure-feeds the fluid (see Patent Literature 1, for example).

### Citation List

### Patent Literature

Patent Literature 1: Japanese Patent Laid-Open No. 2016-014481

### Summary of Invention

### Technical Problem

Conventionally, in the sealing device, a structure to perform the sealing without the leakage of the fluid to be pressure-fed by the pump even in a low-temperature environment has been demanded. For example, a sealing device to seal the fluid in the low-temperature environment by arraying a plurality of seal rings in series, forming a seal structure, and providing a closing structure having multiple stages has been known. Meanwhile, in such a sealing device, a simpler structure has been demanded.

The present invention has been made in view of the above-described problem, and an object thereof is to provide a sealing device capable of obtaining a desired sealing performance for a fluid by a simple structure even in a low-temperature environment.

### Solution to Problem

For achieving the above object, a sealing device according to the present invention is a sealing device for sealing an annular gap, the sealing device including a single seal ring, in which the single seal ring exerts a desired sealing performance for a fluid, even in a low-temperature environment.

In the sealing device according to an aspect of the present invention, the fluid is a fluid having a low viscosity.

In the sealing device according to an aspect of the present invention, the seal ring is a seal ring for sealing the annular gap, has an arc shape around an axis line, and includes a pair of end portions in a circumferential direction, the pair of end portions is configured to form an abutment joint, and widths of the pair of end portions in a radial direction are smaller than a width of a portion at a center between the pair of end portions in the radial direction.

In the sealing device according to an aspect of the present invention, the seal ring includes an inner peripheral surface facing an inner periphery side and an outer peripheral surface facing an outer periphery side, the width is a width between the inner peripheral surface and the outer peripheral surface, the inner peripheral surface does not have a level difference in the radial direction, and the outer peripheral surface does not have a level difference in the radial direction.

In the sealing device according to an aspect of the present invention, a ratio of the widths of the pair of end portions in the radial direction to the width of the portion at the center in the radial direction is a value in a range of 0.2 to 0.6.

In the sealing device according to an aspect of the present invention, a value of the width in the radial direction is continuous around the axis line.

In the sealing device according to an aspect of the present invention, the width in the radial direction increases from one of the pair of end portions toward the portion at the center, and the width in the radial direction increases from another of the pair of end portions toward the portion at the center.

In the sealing device according to an aspect of the present invention, the outer peripheral surface is along a cylindrical surface having the axis line as a central axis, and the inner peripheral surface is along a cylindrical surface having a central axis offset from the axis line in the radial direction.

In the sealing device according to an aspect of the present invention, a sealing object is a fluid having a lower viscosity than water.

The sealing device according to an aspect of the present invention is used for sealing a gap between a member that performs reciprocating motion and a hole that has a tubular shape and into which the member is inserted.

### Advantageous Effect of Invention

By the sealing device according to the present invention, it is possible to obtain a desired sealing performance for a fluid by a simple structure even in a low-temperature environment.

### Brief Description of Drawings

[Fig. 1] Fig. 1 is an elevational view of a sealing device according to an embodiment of the present invention.
[Fig. 2] Fig. 2 is a perspective view of the sealing device.
[Fig. 3] Fig. 3 is a cross-sectional view showing the attached sealing device in a usage state between a piston and a cylinder in a pump that pressure-feeds liquid.
[Fig. 4] Fig. 4 is a cross-sectional view showing the attached sealing device in the usage state between the piston and the cylinder in the pump that pressure-feeds liquid.
[Fig. 5] Fig. 5 is a view showing a schematic configuration of a sealing performance test device that conducts a sealing performance test for the sealing device.
[Fig. 6] Fig. 6 is a diagram showing results of the sealing performance test.

### Description of Embodiment

Hereinafter, an embodiment of the present invention will be described with reference to the drawings.

A sealing device 1 according to the embodiment of the present invention is a sealing device for sealing an annular gap, and is used in a pump that pressure-feeds liquid. For example, the pump in which the sealing device 1 is used is a pump that pressure-feeds a low-temperature liquid fuel for general industrial use. For example, the low-temperature liquid fuel may be liquid-hydrogen fuel. Specifically, the sealing device 1 is used for sealing an annular gap between a piston that is a member to perform reciprocating motion and a cylinder including a hole that has a tubular shape and into which the piston is inserted. The application object of the sealing device according to the present invention is not limited to the pump that pressure-feeds liquid. The sealing device according to the present invention is used in other pumps, other devices, mechanisms and structures, and the like.

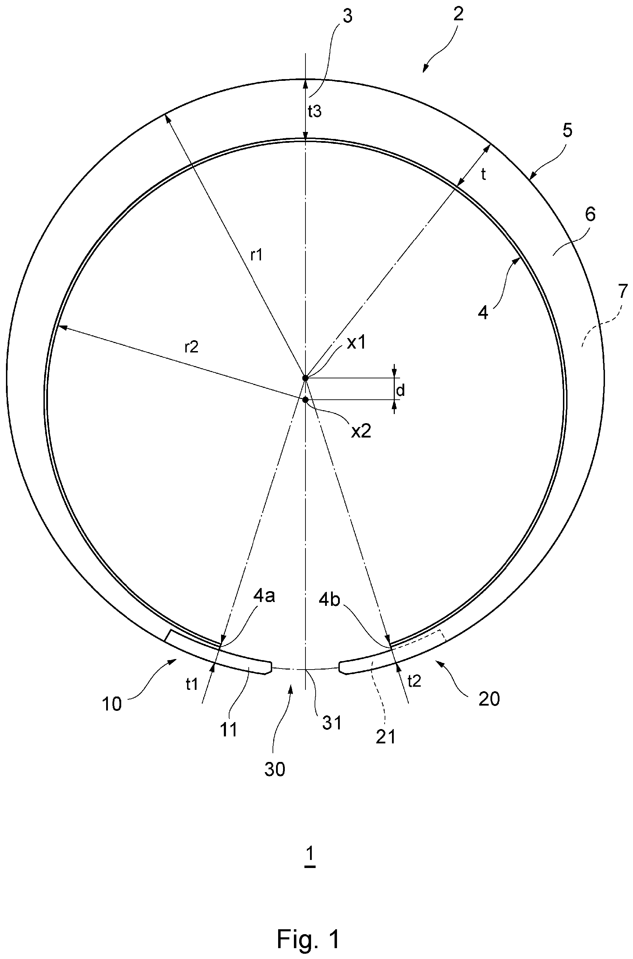

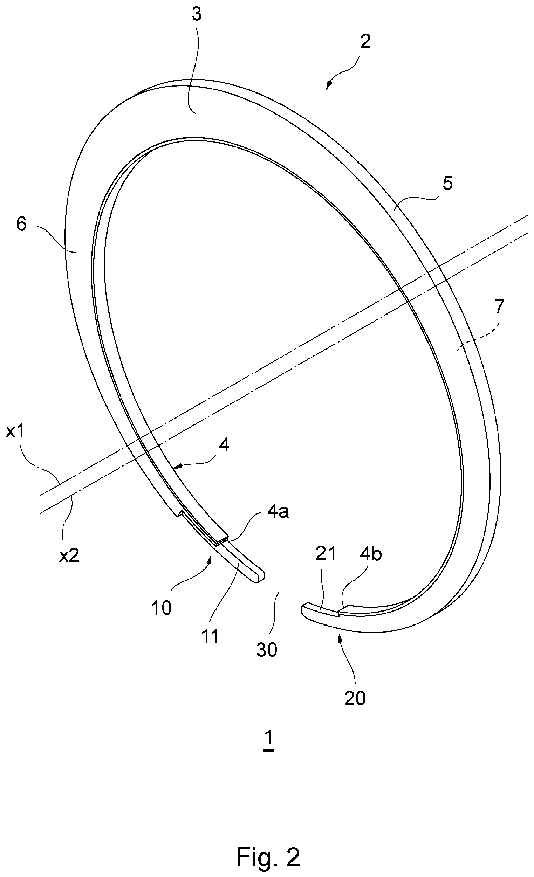

Fig. 1 is an elevational view of the sealing device 1 according to the embodiment of the present invention, and Fig. 2 is a perspective view of the sealing device 1. The sealing device 1 includes a single seal ring 2. The single seal ring 2 exerts a desired sealing performance for a fluid, even in the low-temperature environment. Hereinafter, the configuration of the sealing device 1 will be specifically described.

The seal ring 2 has an arc shape around an axis line x1, and includes a pair of end portions 10, 20 in a circumferential direction. The pair of end portions 10, 20 is configured to form an abutment joint 2a. Width t1, t2 of the pair of end portions 10, 20 in a radial direction of the seal ring 2 are smaller than a width t3 of a portion (hereinafter, also referred to as a "central portion") 3 at a center between the pair of end portions 10, 20 in the radial direction. Hereinafter, the configuration of the seal ring 2 will be specifically described. In Figs. 1 and 2, the seal ring 2 in a free state in which external force is not applied is shown. Further, the radial direction is a direction orthogonal to the axis line x1.

As shown in Figs. 1 and 2, the seal ring 2 is a member having ends and having a substantially circular arc shape, and has a shape that can be housed in an annular groove. The shape of a cross-section of the seal ring 2 on a plane including the axis line x1 is a rectangle or a substantially rectangle, for example. As shown in Figs. 1 and 2, in the free state, the seal ring 2 does not have an annular shape, and a gap 30 extending in the circumferential direction is formed between the end portion 10 and the end portion 20. As described later, in a usage state, the seal ring 2 contacts an inner peripheral surface of the cylinder and elastically deforms, the end portions 10, 20 overlap in the axial direction x1, and the abutment joint 2a is formed.

The seal ring 2 includes an inner peripheral surface 4 that is a surface facing an inner periphery side (an inner side in the radial direction) and an outer peripheral surface 5 that is a surface facing an outer periphery side (an outer side in the radial direction). The inner peripheral surface 4 does not have a level difference in the radial direction, is a smooth surface, and for example, is a surface having tubular shape and being along a cylindrical surface extending along an axis line x2. Similarly, the outer peripheral surface 5 does not have a level difference in the radial direction, is a smooth surface, and for example, is a surface having a tubular shape and being along a cylindrical surface extending along the axis line x1. Further, the seal ring 2 incudes side surfaces 6, 7 that are surfaces facing in the axis line x direction and extending in an arc shape. The side surfaces 6, 7 face away from each other in an axis line x direction, and extend between the inner peripheral surface 4 and the outer peripheral surface 5.

The width (width t) of the seal ring 2 in the radial direction is continuous around the axis line x1. The width t of the seal ring 2 is the distance between the inner peripheral surface 4 and the outer peripheral surface 5 in the radial direction. The width t of the seal ring 2 increases from the end portion 10 toward the central portion 3. The central portion 3 is a portion at the center between the end portion 10 and the end portion 20 in the seal ring 2, as described above, that is, a portion at the center between the end portion 10 and the end portion 20 in the circumferential direction of the seal ring 2. Further, the width t of the seal ring 2 increases from the end portion 20 toward the central portion 3. The width t of the seal ring 2 between the end portion 10 and the central portion 3 and the width t of the seal ring 2 between the end portion 20 and the central portion 3 increase similarly or substantially similarly, for example.

Specifically, for example, the width t of the seal ring 2 gradually increases from the end portion 10 toward the central portion 3, as shown in Fig. 1. Similarly, specifically, for example, the width t of the seal ring 2 gradually increases from the end portion 20 toward the central portion 3, as shown in Fig. 1. Further, the width t of the seal ring 2 between the end portion 10 and the central portion 3 and the width t of the seal ring 2 between the end portion 20 and the central portion 3 gradually increase similarly or substantially similarly. The width t of the seal ring 2 does not need to gradually increase from the end portion 10 toward the central portion 3. For example, for the width t of the seal ring 2, a constant range may be between the end portion 10 and the central portion 3. Similarly, the width t of the seal ring 2 does not need to gradually increase from the end portion 20 toward the central portion 3. For example, for the width t of the seal ring 2, a constant range may be between the end portion 20 and the central portion 3.

For example, the outer peripheral surface 5 of the seal ring 2 is a cylindrical surface or a substantially cylindrical surface having the axis line x1 as a central axis or a substantially central axis. For example, a radius r1 of the outer peripheral surface 5 is larger than the radius of the inner peripheral surface of the cylinder of the pump as an application object described later. For example, the inner peripheral surface 4 of the seal ring 2 is a cylindrical surface or a substantially cylindrical surface having the axis line x2 as a central axis or a substantially central axis. A radius r2 of the inner peripheral surface 4 is larger than the radius of a bottom surface of a groove formed on the piston of the pump as the application object described later. The axis line x2 is offset from the axis line x1 toward the gap 30 side in the radial direction. Further, for example, the axis line x2 is parallel to or substantially parallel to the axis line x1. Specifically, for example, the axis line x2 is offset from the axis line x1 toward a center 31 of the gap 30 in the radial direction, by a predetermined distance (distance d), as shown in Fig. 1. The center 31 of the gap 30 is a middle position in the gap 30 in the circumferential direction, as shown in Fig. 1.

As described above, the width t1, t2 of the seal ring 2 at each of the end portions 10, 20 is smaller than the width t3 of the seal ring 2 at the central portion 3. Specifically, for example, the width t1 of the seal ring 2 at the end portion 10 is the width t of an end (end 4a) of the inner peripheral surface 4 described later (see Figs. 1 and 2). Similarly, specifically, for example, the width t2 of the seal ring 2 at the end portion 20 is the width t of an end (end 4b) of the inner peripheral surface 4 described later (see Figs. 1 and 2). For example, a thickness ratio R1 (t1/t3) that is the ratio of the width t1 of the end portion 10 to the width t3 of the central portion 3 is a value in a range of 0.2 to 0.6. That is, the thickness ratio R1 (t1/t3) is a value of 0.2 or more and 0.6 or less. Further, a thickness ratio R2 (t2/t3) that is the ratio of the width t2 of the end portion 20 to the width t3 of the central portion 3 is a value in a range of 0.2 to 0.6. That is, the thickness ratio R2 (t2/t3) is a value of 0.2 or more and 0.6 or less. The thickness ratio R1 (t1/t3) and the thickness ratio R2 (t2/t3) are the same value or substantially the same value, and hereinafter, both thickness ratios are collectively referred to as a thickness ratio R also.

As described above, the width t of the seal ring 2 increases from the end portions 10, 20 toward the central portion 3, and the thickness ratio of the seal ring 2, in the circumferential direction, becomes large from the end portions 10, 20 toward the central portion 3, and becomes 1 at the central portion 3.

For example, the seal ring 2 is configured to form the abutment joint 2a having a known special step cut shape. As shown in Fig. 1, stepped portions 11, 21 to form the special step cut shape are formed at the end portions 10, 20 respectively. The stepped portion 11 is formed on the outer periphery side of the inner peripheral surface 4, and extends from the end 4a of the inner peripheral surface 4 at the end portion 10 to both sides in the circumferential direction. Similarly, the stepped portion 12 is formed on the outer periphery side of the inner peripheral surface 4, and extends from the end 4b of the inner peripheral surface 4 at the end portion 20 to both sides in the circumferential direction. For example, the stepped portion 11 is provided on the side surface 6 side so as to form a level difference on the side surface 6, and for example, the stepped portion 21 is provided on the side surface 7 side so as to form a level difference on the side surface 7. In the usage state of the seal ring 2, the seal ring 2 elastically deforms, and the stepped portion 11 and the stepped portion 12 overlap in the axis line x1 direction, in other words, the stepped portion 11 and the stepped portion 12 overlap with each other in a predetermined range in the circumferential direction, so that the abutment joint 2a having the special step cut shape is formed. The abutment joint 2a to be formed on the seal ring 2 in the usage state is not limited to the abutment joint having the special step cut shape, and may be an abutment joint having a step cut shape, a straight cut shape, or a bias cut shape, for example. That is, the shape that the end portions 10, 20 have for forming the abutment joint 2a is not limited to the special step cut shape, and may be the step cut shape, the straight cut shape, or the bias cut shape, for example.

The seal ring 2 is made of resin. As the resin material forming the seal ring 2, for example, resin materials such as polyether ether ketone (PEEK), polyphenylene sulfide (PPS), polytetrafluoroethylene (PTFE), polyimide (PI), and polyamide imide (PAI) are included. For example, a filler for improving sliding property and strength may be contained in the resin material of the seal ring 2. As described above, the seal ring 2 is used in the pump that pressure-feeds liquid. The liquid to be pressure-fed as the sealing object is a low-viscosity liquid having a low viscosity, for example. In the case where the sealing device 1 is used in the low-temperature environment, a material having a small linear expansion coefficient is preferable as the material of the seal ring 2. For example, the material of the seal ring 2 is a material having a smaller linear expansion coefficient than 15×10⁻⁵/°C. Further, in the case where the sealing device 1 is used in the low-temperature environment, PEEK, which has a small linear expansion coefficient, is preferable as the resin material of the seal ring 2. For example, the low-temperature environment is an environment in which the atmosphere temperature is lower than the ambient temperature. Specifically, for example, the low-temperature environment is an environment in which the atmosphere temperature is -253°C or an environment in which the atmosphere temperature is lower than -253°C.

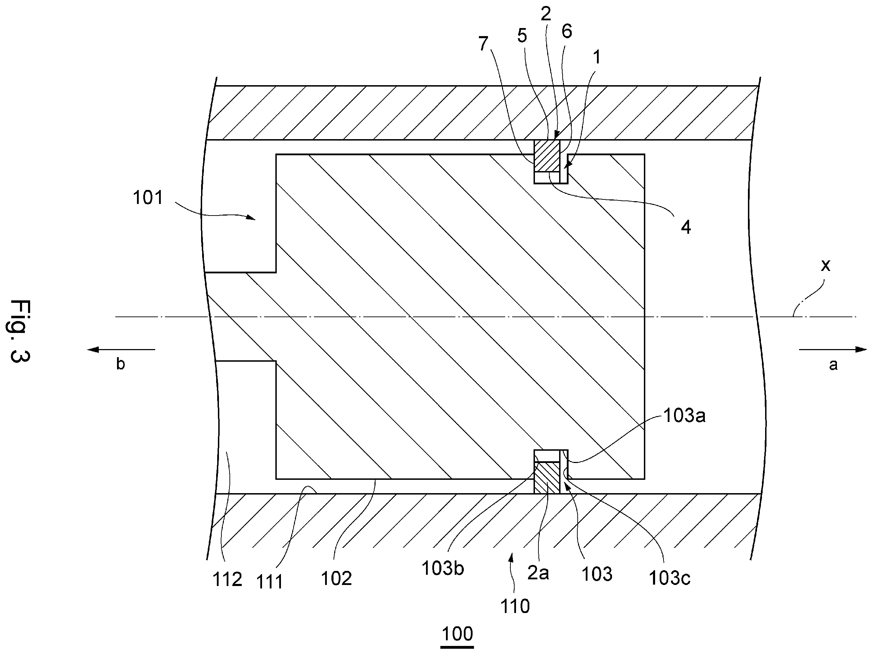

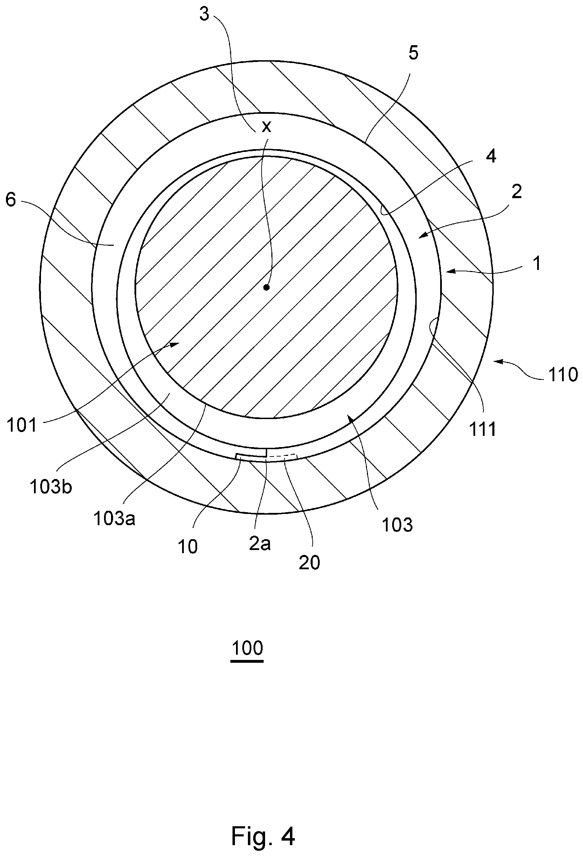

Hereinafter, the operation of the sealing device 1 having the above-described configuration will be described. Figs. 3 and 4 are cross-sectional views showing the attached sealing device 1 in the usage state between a piston 101 and a cylinder 110 in a pump 100 that pressure-feeds liquid. Fig. 3 shows a cross-section on a plane including an axis line x of the cylinder 110, and Fig. 4 shows a cross-section orthogonal to the axis line x. In Fig. 4, the seal ring 2 is not shown as a cross-section.

As shown in Figs. 3 and 4, a groove 103 having an annular shape is formed on an outer peripheral surface 102 of the piston 101. The groove 103 is configured such that the inner peripheral surface 4 of the seal ring 2 faces a bottom surface 103a of the groove 103 and only the single seal ring 2 is housed. In the pump 100, the piston 101 in which the seal ring 2 is attached to the groove 103 is inserted into a hole 112 of the cylinder 110. In the pump 100, the piston 101 performs reciprocating motion in the hole 112 of the cylinder 110, and thereby, the liquid is pressed by the piston 101, so that the liquid is pressure-fed in an arrow a direction.

As described above, the radius of the outer peripheral surface 5 of the seal ring 2 is larger than the radius of the inner peripheral surface 111 marking off the hole 112 of the cylinder 110. Therefore, in the pump 100, the seal ring 2 contacts the inner peripheral surface 111 of the cylinder 110, elastically deforms, and warps to the inner periphery side, and the abutment joint 2a is formed. That is, the outer peripheral surface 5 of the seal ring 2 is pressed to the inner periphery side by the inner peripheral surface 111 of the cylinder 110, the seal ring 2 elastically deforms, and the stepped portion 11 of the end portion 10 and the stepped portion 12 of the end portion 20 in the seal ring 2 overlap in the axis line x1 direction, in the predetermined range in the circumferential direction, so that the abutment joint 2a having the special step cut shape is formed. Thereby, the radius of the outer peripheral surface 5 of the seal ring 2 becomes small, and the outer peripheral surface 5 of the seal ring 2 faces the inner peripheral surface 111 of the cylinder 110, over the whole periphery around the axis line x.

The width t of the seal ring 2 becomes small from the central portion 3 toward the end portions 10, 20, that is, becomes thin. Therefore, when the seal ring 2 is fitted into the hole 112 of the cylinder 110, the seal ring 2 elastically deforms around the central portion 3, such that both sides warp to the axis line x side. In the seal ring 2, a portion having a smaller width t elastically deforms so as to be more pressed against the inner peripheral surface 111 and more warp. The end portions 10, 20 of the seal ring 2 and vicinities thereof, at which the width is smaller, that is, thinner, elastically deform easily so as to more warp to the inner periphery side, and therefore, elastically deform so as to be more pressed against the inner peripheral surface 111 and more warp. In this way, the seal ring 2 deforms and forms the abutment joint 2a when fitted into the hole 111 of the cylinder 110, and the outer peripheral surface 5 faces the inner peripheral surface 111 of the cylinder 110, over the whole periphery around the axis line x.

In order that the outer peripheral surface 5 contacts the inner peripheral surface 111 of the cylinder 110 at the end portions 10, 20 of the seal ring 2 and the vicinities in the pump 100, the end portions 10, 20 of the seal ring 2 and the vicinities need to elastically deform so as to warp to the inner periphery side along the inner peripheral surface 111 of the cylinder 110. In the seal ring 2, the widths t of the end portions 10, 20 of the seal ring 2 and the vicinities more become small toward the end portions 10, 20, and the end portions 10, 20 of the seal ring 2 and the vicinities more easily deform along the inner peripheral surface 111 of the cylinder 110. Therefore, in the pump 100, even at the end portions 10, 20 of the seal ring 2 and the vicinities, at which a gap is easily generated between the seal ring 2 and the inner peripheral surface 111 of the cylinder 110, the seal ring 2 deforms such that the outer peripheral surface 5 is along the inner peripheral surface 111 of the cylinder 110, and can restrain a gap from being formed between the outer peripheral surface 5 and the inner peripheral surface 111 of the cylinder 110. Accordingly, at the end portions 10, 20 of the seal ring 2 and the vicinities, the gap in the radial direction that is made between the outer peripheral surface 5 and the inner peripheral surface 111 of the cylinder 110 is small, and the range of this gap in the circumferential direction is small. In this way, in the pump 100, the outer peripheral surface 5 of the seal ring 2 contacts the inner peripheral surface 111 of the cylinder 110, over almost the whole periphery around the axis line x, and the gap to be generated is small. Alternatively, at the end portions 10, 20 of the seal ring 2 and the vicinities, there is no gap in the radial direction that is made between the outer peripheral surface 5 and the inner peripheral surface 111 of the cylinder 110, and in the pump 100, the outer peripheral surface 5 of the seal ring 2 contacts the inner peripheral surface 111 of the cylinder 110, over the whole periphery around the axis line x, so that no gap is generated.

The above-described offset (distance d) of the axis line x2 of the inner peripheral surface 4 of the seal ring 2 from the axis line x1 of the outer peripheral surface 5 is set, for example, such that the seal ring 2 elastically deforms along the inner peripheral surface 111 of the cylinder 110 as described above.

In this way, in the pump 100, the seal ring 2 can cause the outer peripheral surface 5 of the seal ring 2 to contact the inner peripheral surface 111 of the cylinder 110, over almost the whole periphery or the whole periphery around the axis line x. Further, there is a small or no gap in the radial direction that is made between the outer peripheral surface 5 of the seal ring 2 and the inner peripheral surface 111 of the cylinder 110, and the range of this gap in the circumferential direction is small. Therefore, even when the liquid that the piston 101 pressure-feeds in the cylinder 110 is a liquid having a low viscosity, the sealing device 1, by the single seal ring 2, restrains the liquid to be pressure-fed from leaking from the outer peripheral surface 5 of the seal ring 2 and the inner peripheral surface 111 of the cylinder 110. Thereby, the sealing device 1 can improve the pressure-feed efficiency of the pump 100, by the single seal ring 2. In this way, even when the fluid to be pressure-fed is a low-viscosity liquid having a low viscous property, the sealing device 1 can maintain the sealing performance or restrain the decrease in the sealing performance, by the single seal ring 2 as a simple structure, without performing conventional sealing by arraying a plurality of seal rings in series and providing a closing structure in a multiple-stage manner. Therefore, the sealing device 1 can exert a desired sealing performance for the fluid having a low viscosity, by the single seal ring 2. For example, the low viscosity is a viscosity lower than that of water.

Further, the seal ring 2 elastically deforms easily so as to warp from the central portion 3 toward the end portions 10, 20, and therefore, can cause the outer peripheral surface 5 of the seal ring 2 to contact the inner peripheral surface 111 of the cylinder 110, over almost the whole periphery or the whole periphery around the axis line x, even when the seal ring 2 contracts in the low-temperature environment. That is, in the low-temperature environment, the seal ring 2 contracts such that a gap is generated between the outer peripheral surface 5 of the seal ring 2 and the inner peripheral surface 111 of the cylinder 110, but due to this contraction, the elastically deformed seal ring 2 deforms in a direction of a natural state, so that the outer peripheral surface 5 of the seal ring 2 maintains the contact with the inner peripheral surface 111 of the cylinder 110 over almost the whole periphery or the whole periphery around the axis line x.

For example, the radius r1 of the outer peripheral surface 5 is adjusted, in order that the outer peripheral surface 5 of the seal ring 2 and the inner peripheral surface 111 of the cylinder 110 maintains the contact over almost the whole periphery or the whole periphery around the axis line x even when the seal ring 2 contracts in the low-temperature environment. Specifically, the radius r1 of the outer peripheral surface 5 is adjusted, such that the outer peripheral surface 5 of the seal ring 2 and the inner peripheral surface 111 of the cylinder 110 maintains the contact over almost the whole periphery or the whole periphery around the axis line x, in a state where the seal ring 2 has elastically deformed, even when the seal ring 2 contracts in the low-temperature environment. For example, the radius r1 of the outer peripheral surface 5 is adjusted so as to correspond to the radius of the inner peripheral surface 111 of the cylinder 110, and the like. In this case, the seal ring 2 elastically deforms by receiving strong constraint force from the cylinder 110, in a state of having not thermally contracted, but the end portions 10, 20 of the seal ring 2 and the vicinities are configured to easily deform along the inner peripheral surface 111 of the cylinder 110, so that a gap is restrained from being formed between the outer peripheral surface 5 and the inner peripheral surface 111 of the cylinder 110.

As described above, the sealing device 1 according to the present embodiment can maintain the sealing performance for the fluid or restrain the decrease in the sealing performance, by the single seal ring 2, even in the low-temperature environment. Therefore, the sealing device 1 according to the present embodiment can exert a desired sealing performance by the single seal ring 2, even in the low-temperature environment. For example, the desired sealing performance is a sealing performance that is arbitrarily set by a user or the like depending on the application object and application situation of the sealing device 1. Specifically, for example, the desired sealing performance is set by setting the leakage amount of the sealing object for a predetermined use time under a predetermined use condition such as a predetermined temperature, atmosphere pressure, and others.

Further, as the material of the seal ring 2 is a material having a lower linear expansion coefficient, it is possible to more restrain the contraction of the seal ring 2 in the low-temperature environment, and therefore, it is effective that the material of the seal ring 2 is a material having a low linear expansion coefficient, for maintaining the sealing performance for the fluid or restraining the decrease in the sealing performance in the low-temperature environment. Further, as described above, the sealing device 1 according to the present embodiment can maintain the sealing performance for the low-viscosity fluid having a low viscosity or restrain the decrease in the sealing performance, by the single seal ring 2. Therefore, the sealing device 1 according to the present embodiment can exert a desired sealing performance for the fluid having a low viscosity, by the single seal ring 2.

In the usage state, as shown in Fig. 3, when the piston 101 moves in the arrow a direction, the side surface 7 of the seal ring 2 contacts a side surface 103b of the groove 103 of the piston 101, and the annular gap between the piston 101 and the inner peripheral surface 111 of the cylinder 110 is sealed. On the other hand, when the piston 101 moves in an arrow b direction, the side surface 6 of the seal ring 2 contacts a side surface 103c of the groove 103 of the piston 101, and the annular gap between the piston 101 and the inner peripheral surface 111 of the cylinder 110 is sealed. Further, in the usage state, the axis line x of the cylinder 110 and the axis line x1 of the outer peripheral surface 5 of the seal ring 2 coincide or substantially coincide.

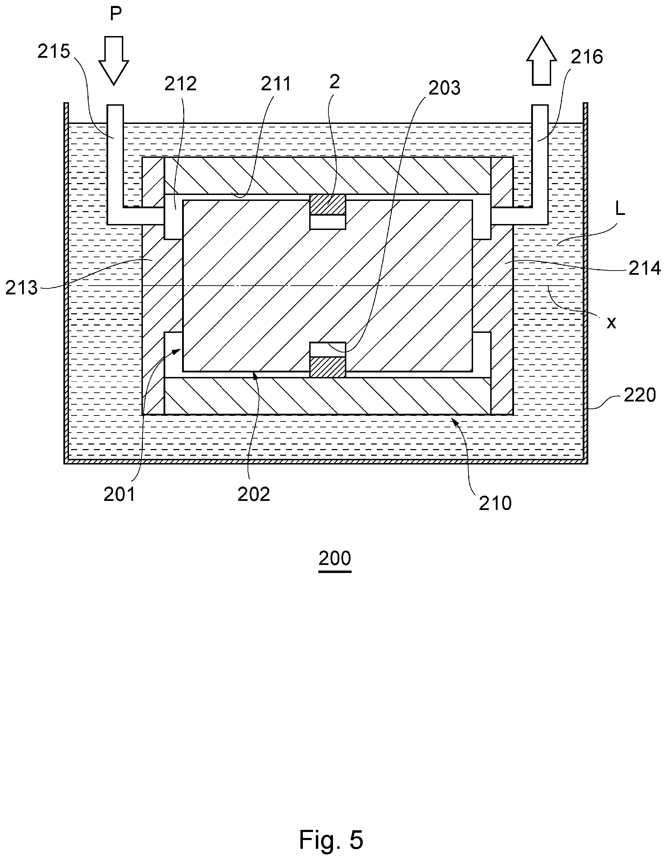

Next, a sealing performance test for evaluating the sealing performance of the sealing device 1 will be described. Fig. 5 is a view showing a schematic configuration of a sealing performance test device 200 that conducts the sealing performance test for the sealing device 1. As shown in Fig. 5, the sealing performance test device 200 includes a dummy piston body 201 and dummy cylinder body 210 imitating the piston 101 and cylinder 110 of the above-described pump 100 respectively. On the dummy piston body 201, an outer peripheral surface 202 similar to the outer peripheral surface 102 of the piston 101 is formed, and on the outer peripheral surface 202, a groove 203 similar to the groove 103 of the piston 101 is formed. Further, on the dummy cylinder body 210, an inner peripheral surface 211 similar to the inner peripheral surface 111 of the cylinder 110 is formed, and a hole 212 is formed. The dummy piston body 201 in which the seal ring 2 of the sealing device 1 is housed in the groove 203 is inserted into the hole 212 of the dummy cylinder body 210, and the seal ring 2 becomes a usage state similar to the usage state of being attached to the pump 100. As shown in Fig. 5, the dummy cylinder body 210 has a tubular shape, both ends are opened, and both the opened ends are closed by lid bodies 213, 214. Further, to the lid bodies 213, 214, pipe members 215, 216 passing through them respectively and communicating with the hole 212 are attached. Further, the dummy piston body 201 is supported by the lid bodies 213, 214, in an immovable manner.

In the sealing performance test, as shown in Fig. 5, the sealing performance test device 200 is put in a container 220 in which coolant L is stored, and is sunk in the coolant L. However, distal ends of the pipe members 215, 216 protrudes from the surface of the coolant L. For example, the coolant L is liquid nitrogen (LN₂). In this state, when the seal ring 2 in the sealing performance test device 200 had a predetermined test temperature, a test fluid pressurized at a test pressure P having a predetermined level was introduced from the pipe member 215 into the hole 212, and while this state was maintained, the leakage amount of the test fluid leaked until a predetermined time lapsed was investigated. For the leakage amount of the test fluid, the test fluid leaked out of the seal ring 2 was collected from the pipe member 216, and this was weighed. As test fluid, nitrogen gas was used. Further, as the test conditions, the test temperature was about -190°C, and the test pressure P was 0.5 MPa to 8 MPa.

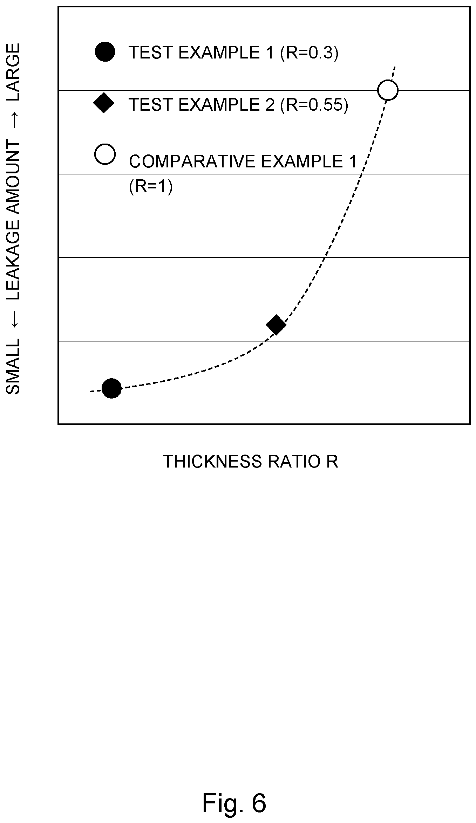

Further, as the seal ring 2, a seal ring 2 (test example 1) whose thickness ratio R was 0.3 and a seal ring 2 (test example 2) whose thickness ratio R was 0.55 were prepared, and the sealing performance test was performed for the test examples 1 and 2. Further, the sealing performance test was performed for a conventional seal ring (comparative example 1) in which the width t of the seal ring is uniform over the whole in the circumferential direction, using the above-described sealing performance test device 200. Fig. 6 is a diagram showing results of the sealing performance test for the seal rings 2 (test examples 1 and 2) and the conventional seal ring (comparative example 1).

As shown in Fig. 6, the leakage amount in the test example 1 (thickness ratio P: 0.3) decreased by 95% compared to the leakage amount in the comparative example 1. Further, the leakage amount in the test example 2 (thickness ratio P: 0.55) decreased by 70% compared to the leakage amount in the comparative example 1. Thus, it is found that the seal ring 2 of the sealing device 1 can considerably improve the sealing performance for the fluid having a low viscosity compared to the conventional seal ring. Further, it is expected that the relation between the thickness ratio R and the leakage amount is a relation shown by a dotted line in Fig. 6.

As described above, in the sealing device 1 according to the embodiment of the present invention, by the single seal ring 2, it is possible to maintain the sealing performance for the fluid, even in the low-temperature environment. Alternatively, it is possible to restrain the decrease in the sealing performance for the fluid, even in the low-temperature environment. Thus, by the sealing device 1 according to the embodiment of the present invention, it is possible to obtain a desired sealing performance for the fluid, by a simple structure, even in the low-temperature environment. Further, by the sealing device 1 according to the embodiment of the present invention, even when the sealing object has a low viscosity, it is possible to maintain the sealing performance or restrain the decrease in the sealing performance, by the single seal ring 2. Thus, by the sealing device 1 according to the embodiment of the present invention, it is possible to obtain a desired sealing performance for the fluid having a low viscosity, by a simple structure.

The present invention has been described above with the above embodiment, but the technical scope of the present invention is not limited to the scope described in the above embodiment. It is obvious to a person skilled in the art that it is possible to give various alterations or modifications to the above embodiment. It is obvious from the description in the claims that modes resulting from giving such alterations or modifications also can be included in the technical scope of the present invention.

The embodiment described above is an embodiment for facilitating understanding of the present invention, and is not an embodiment for limitedly interpreting the present invention. Further, the above-described embodiment does not limit a utilization object for which the present invention is utilized, and the present invention can include everything as the utilization object. Each constituent element included in the above embodiment and the disposition, material, condition, shape, size, and others thereof are not limited to shown examples, and can be altered when appropriate. For example, the present invention includes differences to be generated in execution, as exemplified by tolerances in manufacturing. Further, it is possible to partially replace or combine constituent elements shown in different embodiments, in a range in which there is no technical inconsistency. Further, it is possible to selectively combine constituents when appropriate, so as to achieve at least some of the above-described problems and effects.

For example, the cross-section shape of the seal ring 2 is not limited to a rectangle or a substantially rectangle. For example, the inner peripheral surface 5 of the seal ring 2 may include a projection portion projecting to the inner periphery side, and the cross-section shape of the seal ring 2 may be a T-shape. Further, a plurality of seal rings 2 may be arrayed and used. For example, a plurality of grooves 103 may be formed on the piston 101 so as to be spaced in the axis line x direction, and seal rings 2 may be attached to the plurality of grooves 103 respectively. Further, the application object of the seal ring 2 is not limited to the pump that receives static pressure as described above, and may receive dynamic pressure. For example, the seal ring 2 may be used for the sealing between a shaft that rotates around an axis line and a through-hole through which the shaft passes, or may be provided between an outer-side member and an inner-side member that relatively rotate.

### Reference Signs List

1 sealing device, 2 seal ring, 2a abutment joint, 3 central portion, 4 inner peripheral surface, 5 outer peripheral surface, 6, 7 side surface, 10, 20 end portion, 11, 21 stepped portion, 30 gap, 31 center, 100 pump, 101 piston, 102 outer peripheral surface, 103 groove, 103a bottom surface, 103b, 103c side surface, 110 cylinder, 111 inner peripheral surface, 112 hole, 200 sealing performance test device, 201 dummy piston body, 202 outer peripheral surface, 203 groove, 210 dummy cylinder body, 211 inner peripheral surface, 212 hole, 213, 214 lid body, 215, 216 pipe member, 220 container, d distance, R, R1, R2 thickness ratio, r1, r2 radius, t, t1, t2, t3 width (the width in the radial direction), x, x1, x2 axis line

## Claims

1. A sealing device for sealing an annular gap, the sealing device comprising
a single seal ring, wherein
the single seal ring exerts a desired sealing performance for a fluid, even in a low-temperature environment.

2. The sealing device according to claim 1, wherein the fluid is a fluid having a low viscosity.

3. The sealing device according to claim 1 or 2, wherein:
the seal ring is a seal ring for sealing the annular gap, has an arc shape around an axis line, and includes a pair of end portions in a circumferential direction;
the pair of end portions is configured to form an abutment joint; and
widths of the pair of end portions in a radial direction are smaller than a width of a portion at a center between the pair of end portions in the radial direction.

4. The sealing device according to claim 3, wherein:
the seal ring includes an inner peripheral surface facing an inner periphery side and an outer peripheral surface facing an outer periphery side;
the width is a width between the inner peripheral surface and the outer peripheral surface;
the inner peripheral surface does not have a level difference in the radial direction; and
the outer peripheral surface does not have a level difference in the radial direction.

5. The sealing device according to claim 4, wherein
a ratio of the widths of the pair of end portions in the radial direction to the width of the portion at the center in the radial direction is a value in a range of 0.2 to 0.6.

6. The sealing device according to claim 3, wherein
a value of the width in the radial direction is continuous around the axis line.

7. The sealing device according to claim 6, wherein:
the width in the radial direction increases from one of the pair of end portions toward the portion at the center; and
the width in the radial direction increases from another of the pair of end portions toward the portion at the center.

8. The sealing device according to claim 4, wherein:
the outer peripheral surface is along a cylindrical surface having the axis line as a central axis; and
the inner peripheral surface is along a cylindrical surface having a central axis offset from the axis line in the radial direction.

9. The sealing device according to claim 1, wherein
a sealing object is a fluid having a lower viscosity than water.

10. The sealing device according to claim 1, wherein
the sealing device is used for sealing a gap between a member that performs reciprocating motion and a hole that has a tubular shape and into which the member is inserted.
